# EUROPEAN PATENT SPECIFICATION

(11) **EP 2 886 865 B1**
(45) Date of publication and mention of the grant of the patent: **06.06.2018**
(21) Application number: 14184345.8
(22) Date of filing: 11.09.2014
(51) Int. Cl.: F04B 49/24, F04B 49/08, F04B 49/10, F04B 35/06, F04B 41/02, G01L 7/16, G01L 19/06

(54) **Air compressor**
Luftkompressor
Compresseur d'air

(30) Priority: 13.09.2013 TW 102133296
(43) Date of publication of application: 24.06.2015
(73) Proprietor: Jhou, Wen-San, An-Din Dist. Tainan City (TW)
(72) Inventor: Jhou, Wen-San, An-Din Dist. Tainan City (TW)
(74) Representative: Lang, Christian

(56) References cited:
- GB-A- 274 228
- GB-A- 2 102 351
- JP-U- 3 185 073
- JP-U- H0 487 440
- JP-U- S6 321 836
- US-A- 4 777 828
- US-B2- 7 462 018
- US-B2- 8 297 944

## Description

### FIELD OF THE INVENTION

The present invention relates to an air compressor, in particular to the air compressor having a pen pressure gauge movably installed at one of the air output ducts on a gas storage seat and the pen pressure gauge further includes an over-pressure protection unit, and the pressure gauge is provided for measuring the change of a pressure value as well as releasing air by the over-pressure protection unit and stopping inputting air into an object to be inflated when the pressure value is greater than a predetermined maximum safety value, so as to achieve the safety effect without installing an additional safety value and prevent damages to an inflated object.

### BACKGROUND OF THE INVENTION

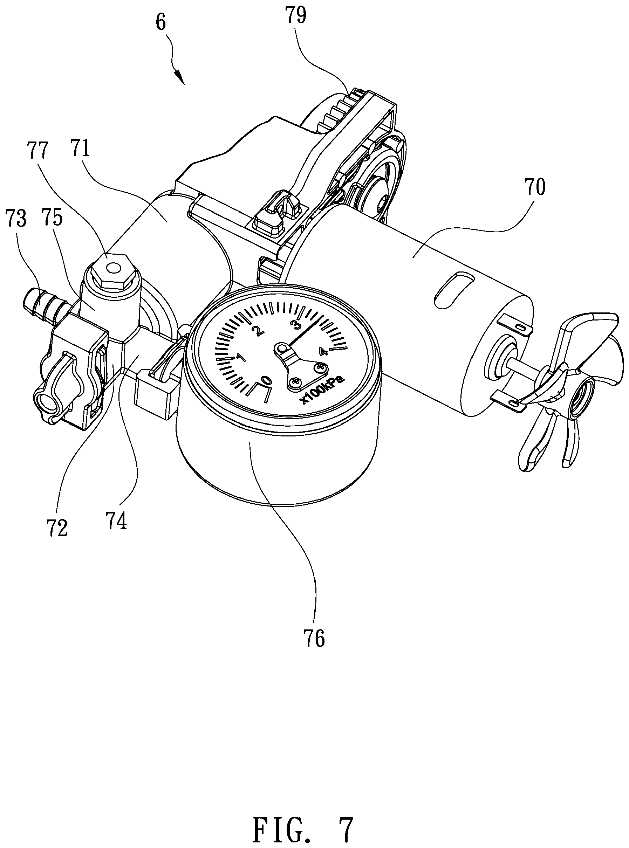

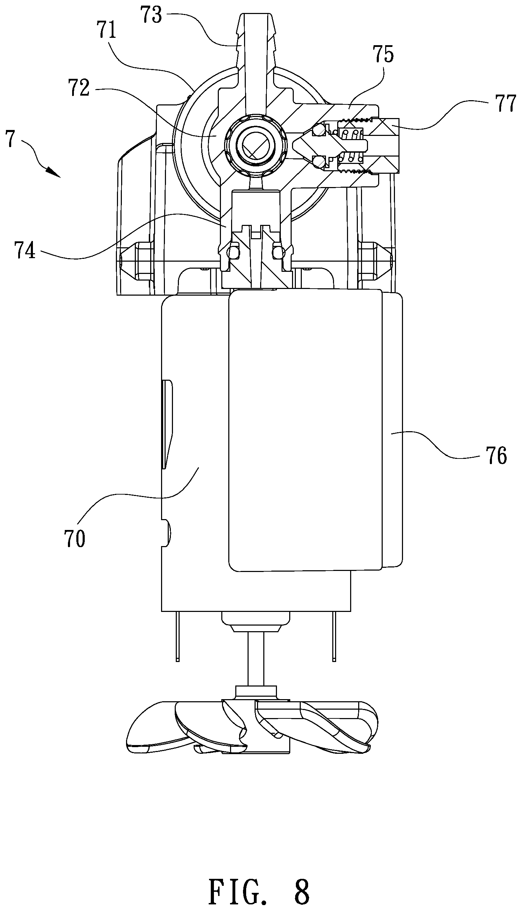

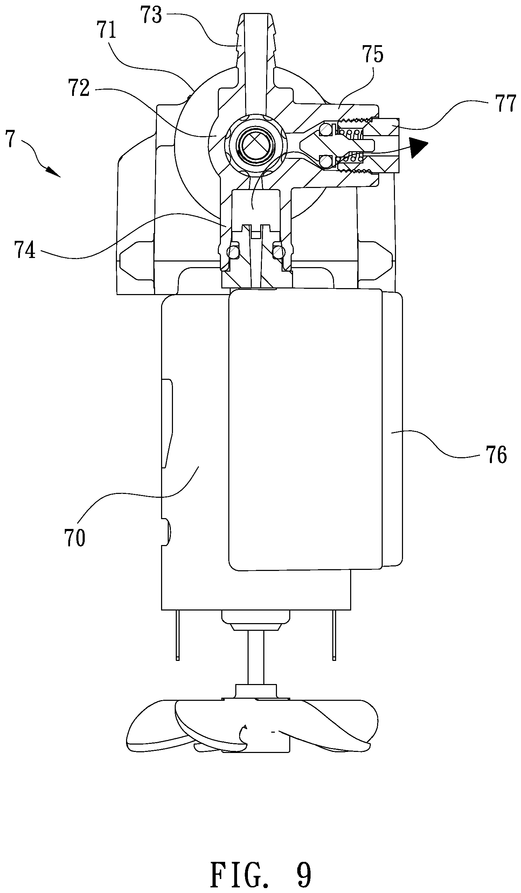

The inventor of the present invention based on years of experience in the field of compact air compressors to conduct extensive researches and experiments in order to simplify the complicated structure of the conventional air compressors and provide products by an easy and quick assembling process or improve the structure of the air compressor to enhance the performance of the air compressor. For example, the conventional air compressor simply has two air outlet ducts on the gas storage seat, and one of them is used for installing a circular-box shaped pressure display meter and the other one is a hose coupled to an end having an air nozzle (wherein the air nozzle may be connected to an object to be inflated). Since there are only two air outlet ducts and both protection and safety functions of the air compressor are restricted, therefore the inventor of the present invention developed an air compressor as disclosed in U.S. Pat. No. 7,462,018, and the air compressor comes with a structure comprising a plurality of ducts and adds a safety valve and a relief valve, wherein the safety valve is provided for relieving the pressure when an over-pressure of the air compressor occurs, so as to protect the safety of the object to be inflated. Since the conventional box-shaped pressure meter is fixed to an external end of the duct directly by a screwing means or a bolt, and such connection method is undesirable, therefore the inventor of the present invention further developed a pressure meter structure that can be assembled or removed quickly as disclosed in U.S. Pat. No. 8,297,944, and such patented

invention allows users to install and remove various facilities such as the pressure meter, hose, relief valve, etc, so as to provide a convenient and practical assembling process. However, the conventional air compressor still has a safety valve installed in one of the ducts to prevent the over-pressure issue, and thus incurring a higher manufacturing cost for providing the protection effect. On the other hand, the conventional air compressor adopts a needle type pressure meter which is a circular-box object, and thus simply provides the functions of measuring the pressure of the air compressor and display the current pressure value. The conventional mechanical box-shaped pressure meter does not have other new functions. With reference to FIGS. 7 to 9 for the brief structure of the conventional air compressor equipped with the safety valve and the circular-box needle type pressure meter, after the air compressor is started and driven by a motor 70, a transmission mechanism 79 is provided for driving a piston to move reciprocally in a cylinder 71, and an air reservoir 72 includes a plurality of air outlet ducts 73, 74, 75, wherein the duct 73 is used for installing an inflating hose (not shown in the figure, the duct 74 is coupled to the circular-box needle-type pressure meter 76, and the duct 75 includes a safety valve 77 installed therein. Although the functional accessories including the hoses, pressure meter 76 and safety valve 77 can be assembled to the air reservoir 72 of the air compressor 7 directly and conveniently, yet when the air compressor 7 produces a pressure greater than a predetermined safety tire pressure of an inflating car tire, the safety valve 77 is started to relieve the pressure. If the safety valve 77 is expired, stuck, or malfunctioned, the car tire will be over-inflated or even the risk of having a flat tire may occur, and the manufacturing cost cannot be lowered. In view of the problem of the conventional air compressor that requires an additional installation of a safety valve to prevent the issue of having an over pressure, and results in an increase manufacturing cost, and the mechanical box-shaped pressure meter does not come with any synergistic effect, the inventor of the present invention further developed an air compressor capable of providing the synergistic effect of the pressure meter without requiring the installation of a pressure safety valve.

Document JP 3185073 U discloses a conventional air compressor having a pressure gauge movably installed at one of the air output ducts on a gas storage seat, wherein the pressure gauge further includes an over-pressure protection unit. However the pressure gauge has a large volume and a complex structure and can be easily damaged in use.

### SUMMARY OF THE INVENTION

Therefore, it is a primary objective of the present invention to overcome the aforementioned problems of the prior art by providing an air compressor, wherein the air compressor has an air reservoir with a duct that is coupled directly to a pressure gauge of an over-pressure protection unit, and the pressure gauge is provided for measuring a change of the current pressure value as well as releasing air by an over-pressure protection unit when the pressure value reaches a predetermined maximum safety pressure value, and the air compressor does not require installing an additional air outlet duct in the pressure safety valve.

The second objective of the present invention is to provide an air compressor, wherein the pressure gauge of the air compressor is a pen piston type pressure measuring device.

The third objective of the present invention is to provide an air compressor, wherein the pressure gauge of the air compressor includes an over-pressure protection unit which is a relief hole provided for flowing out the over-pressure air.

The fourth objective of the present invention is to provide an air compressor, wherein the pressure gauge of the air compressor comprises a main body, and an end of the main body is coupled to a cover, and the other end of the main body is provided for receiving the compressed air produced by the air compressor, and a piston cylinder capable of performing a piston movement is installed in the main body, and the piston cylinder acts on a primary spring to allow the pressure gauge to maximize the sensitivity and precision of measuring the pressure value.

The fifth objective of the present invention is to provide an air compressor, wherein the pressure gauge of the air compressor has a main body which is a transparent cylindrical pipe, and a pressure value numeric calibration is marked on the pipe, and a colored O-ring is sheathed onto a position proximate to an end of the piston cylinder, such that when the piston cylinder is acted by the compressed air to move, the colored O-ring can be visually seen by users easily to learn the current pressure value.

The sixth objective of the present invention is to provide an air compressor, wherein the pressure gauge of the air compressor includes a relieve hole of the over-pressure protection unit, such that when the piston cylinder is pushed continuously by the pressure of the compressed air and the predetermined maximum safety pressure value is reached, the colored O-ring of the piston cylinder is just passed across the relief hole, so that the subsequent inputted compressed air can be released from the relief hole, and the piston cylinder is no longer pushed by the compressed air anymore.

The seventh objective of the present invention is to provide an air compressor, wherein the pressure gauge is connected to an air compressor of a motor vehicle conveniently, and the connector of the main body of the pressure gauge is connected in series with the duct of the air compressor.

### BRIEF DESCRIPTION OF THE DRAWINGS

FIG. 1 is a perspective view of an air compressor of the present invention;
FIG. 2 is a schematic planar view of an air compressor of the present invention;
FIG. 3 is a sectional view of a pressure meter installed at an air compressor of the present invention;
FIG. 4 is a sectional view showing the operation movement of a pressure meter installed at a piston cylinder of an air compressor of the present invention;
FIG. 5 is a perspective view of a pressure gauge of the present invention;
FIG. 6 is an exploded view of a pressure gauge of the present invention;
FIG. 7 is a perspective view of a conventional air compressor;
FIG. 8 is a sectional view of a conventional air compressor; and
FIG. 9 is a schematic view showing the operation movement of a safety valve of a conventional air compressor;

### DESCRIPTION OF THE PREFERRED EMBODIMENTS

The aforementioned and other objectives and advantages of the present invention will become clearer in light of the following detailed description of an illustrative embodiment of this invention described in connection with the drawings. It is intended that the embodiments and drawings disclosed herein are to be considered illustrative rather than restrictive.

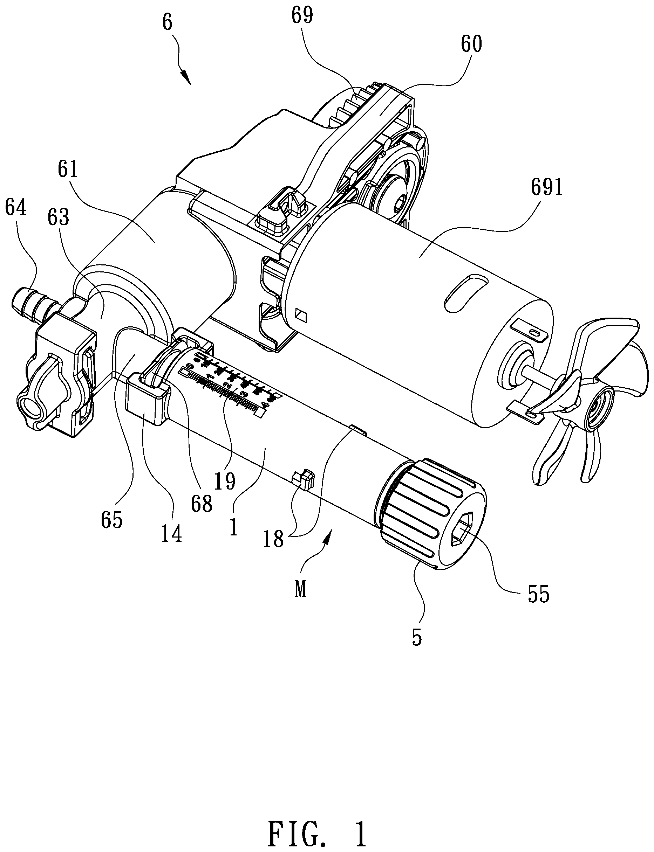

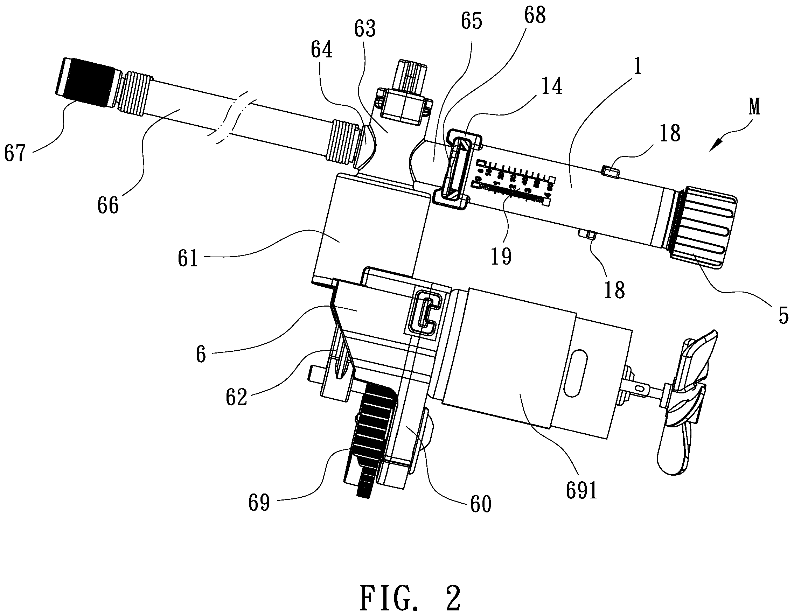

One of the technical characteristics of the present invention is that a pressure gauge M with an over-pressure protection unit is connected to an air compressor 6, so that the air compressor 6 does not require installing an additional safety valve. The other technical characteristic of the present invention is that the pressure gauge M uses a linear shifter 29 to indicate the pressure value, and the linear shifter 29 plays the role of the piston unit as disclosed in the present invention, and the pressure gauge M is not a circular-box needle type pressure meter (or pressure gauge), but it is a pen piston type pressure gauge. With reference to FIGS. 1 and 2 for the basic structure of an air compressor of a preferred embodiment of the present invention, the air compressor 6 comprises a substrate 60, a motor 691 coupled onto the substrate 60, a transmission mechanism 69 which is a transmission gear set, a substrate 60, and a cylinder 61 extended from the air compressor 6 and coupled to an air reservoir 63, and the air reservoir 63 includes a plurality of ducts 64, 65. Wherein, the duct 64 is coupled to a hose 66 which has an air nozzle 67 installed at an end of the hose 66, and the air nozzle 67 may be combined with an object to be inflated or requiring compressed air. For example, the object is a car tire that required air inflation. The duct 65 is combined directly with a pen pressure gauge M, and the duct 65 is an accessory that can be combined to or removed from the pressure gauge M quickly, as disclosed by the inventor of the present invention in U.S. Pat. No. 8,297,944. The cylinder 61 includes a piston 62 installed therein, and the piston 62 is driven by the transmission mechanism 69 and the motor 691 to deliver compressed air from the ducts 64, 65 of the air reservoir 63 to other functional accessories. When the compressed air is outputted continuously, the quantity of air outputted from the duct 65 is equal to the quantity of air outputted from the duct 64, so that the pressure gauge M can measure a change of the current pressure value. When the pressure value the predetermined maximum safety pressure value, the pressure gauge M turns on an over-pressure protection unit, so that the air compressor 6 of the present invention does not need to use any one of the ducts for installing the pressure safety valve with an over-pressure protection function.

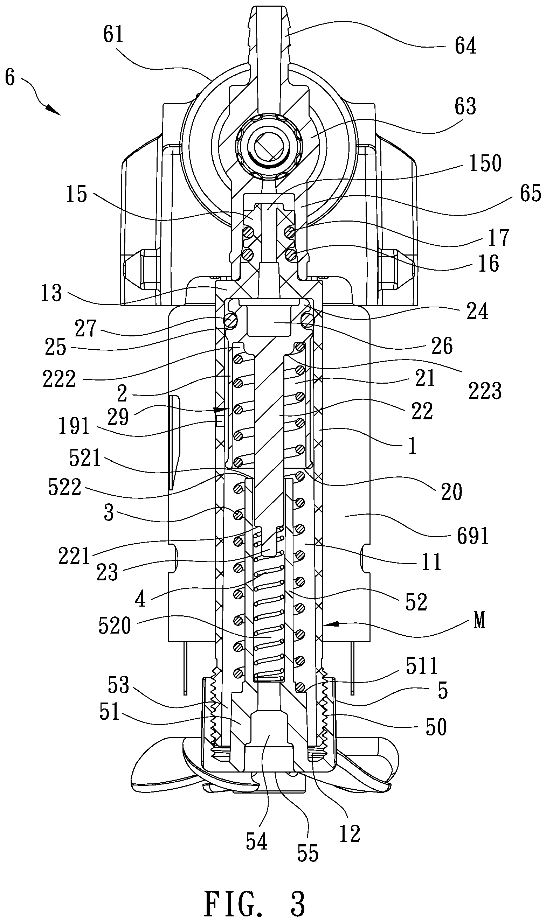

In FIGS. 3 to 6, the pressure gauge M of the present invention uses a linear shifter 29 to indicate a pressure value, and the design of using the linear shifter 29 to indicate the pressure value breaks through the operation method of the conventional needle type or digital pressure meters (or pressure gauges), and the effect of the linear shifter 29 can be maximized such as the movement of the piston unit as described in the preferred embodiment of the present invention. On the other hand, the pressure gauge M of the present invention is not a circular-box needle type pressure meter (or pressure gauge) instead of a pen piston type pressure gauge. The pressure gauge M of the present invention comprises a main body 1, and the nature of the main body 1 is equivalent to the cylinder of a pump, and the main body 1 is a transparent pen having an internal chamber 11 with a circular caliber and an end being an open end 10 and having a male thread 12, and the other end being a rear end 13 and having a pair of embedded clips 14, and a connector 15 installed at the center of an outer side of the rear end 13, and the connector 15 has an inner channel 150 communicated with the internal chamber 11 of the main body 1, and the connector 15 has two separate O-rings 16, 17 installed thereon. The main body 1 has a display screen with a numeric calibration installed at a position near the rear end 13 of the main body 1 and an over-pressure protection unit for releasing air. In a preferred embodiment of the present invention, the over-pressure protection unit is a relief hole 191, and the middle section of the main body 1 has two opposite wing blocks 18.

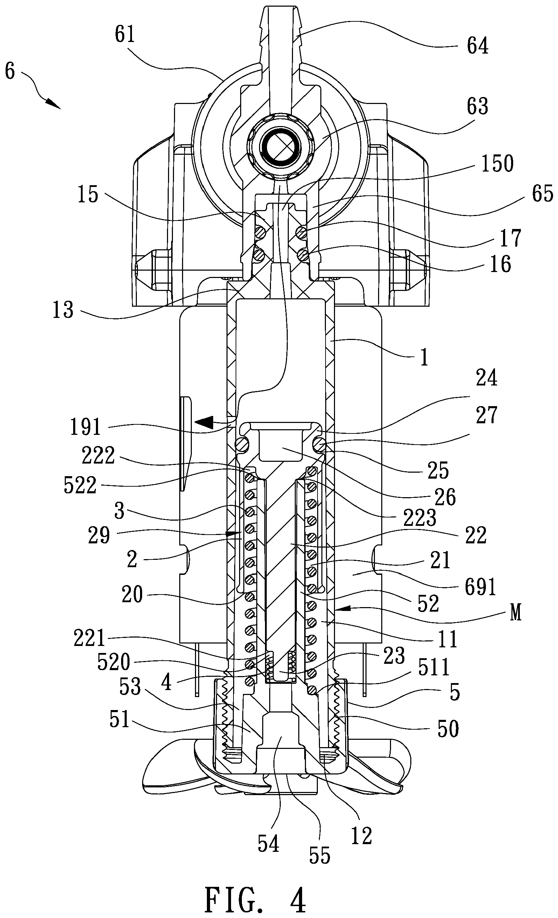

A linear shifter 29 is installed in the internal chamber 11 of the main body 1. When the compressed air produced by the air compressor 6 enters into the rear end 13 of the main body 1, the linear shifter 29 is pushed to perform a linear displacement, and the moving distance of the linear shifter 29 indicates the current pressure value. In a preferred embodiment of the present invention, the piston cylinder 2 acts as the linear shifter 29, and an end of the piston cylinder 2 is an open end 20, and the other end of the piston cylinder is a base 24, and the piston cylinder 2 includes an internal chamber 21 formed therein, and the base 24 has a large shaft column 22 extended from a center position of the bottom of the internal chamber 21 and protruded from the open end 20, and a circular cavity 222 is formed between the bottom of the large shaft column 22 and the cylindrical wall of the piston cylinder 2 (as shown in FIGS. 3 and 4), and a blocking wall 223 with a diameter greater than the diameter of the large shaft column 22 is formed at a joint position between the large shaft column 22 and the base 24 and the blocking wall 223. In addition, a small shaft column 23 with a relatively smaller diameter and length is extended from the top end of the large shaft column 22, and a ceiling 221 is formed at the top end of the large shaft column 22. A cavity 26 is formed on an outer side of the base 24, and a circular groove 25 is formed around the periphery of the cavity 26 and provided for sheathing a colored O-ring 27. The whole piston cylinder 2 can be accommodated into the main body 1, and the base 24 abuts against the bottom of the internal chamber 11, and the inner channel 150 of the connector 15 is communicated with the cavity 26 of the base 24, so that the compressed air produced by the air compressor 6 passes through inner channel 150 and the cavity 26 to apply a pressure onto the piston cylinder 2 to move the piston cylinder 2 in the internal chamber 11 of the main body 1.

For example, an elastic element is a spring, and the present invention adopts a primary spring 3 received into the internal chamber 21 of the piston cylinder 2 and surrounded around the external periphery of the large shaft column 22, and an end of the primary spring 3 precisely abuts against the circular cavity 222, and the external periphery of the primary spring 3 abuts against the internal wall of the piston cylinder 2.

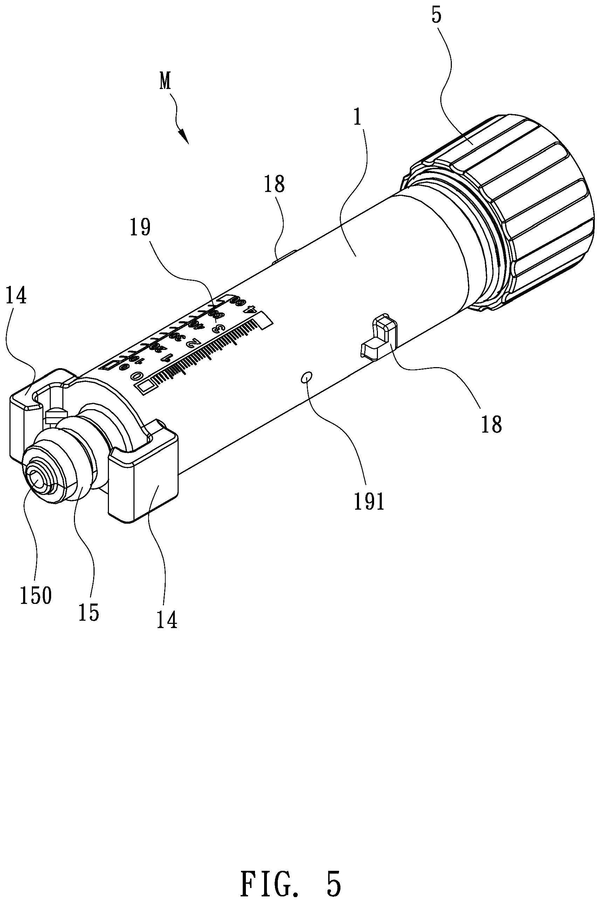

A cover 5 includes a female thread 50, a center base 51 disposed at the center of an internal side of the cover 5, and a ring accommodating slot 53 formed between the center base 51 and an inner sidewall of the cover 5, and a center barrel 52 extended from the top of the center base 51 and having an internal chamber 520, wherein the center barrel 52 has an external diameter smaller than the external diameter of the center base 51, and a ceiling 511 is formed at a joint position between the center barrel 52 and the center base 51, and an external top wall 522 is formed at an end of the center barrel 52 and has an opening 521, and the internal chamber 520 has an internal diameter greater than the external diameter of the large shaft column 22, but the external diameter of the center barrel 52 is smaller than the internal diameter of the primary spring 3, and the other end of the primary spring 3 abuts against ceiling 511. A secondary spring 4 with a relatively smaller coefficient of elasticity is installed in an internal chamber 520 of the center barrel 52, and an end of the secondary spring 4 abuts against the center base 51. After the cover 5 is screwed and coupled to an open end of the main body 1, the other end of the secondary spring 4 is sheathed on the small shaft column 23 and abuts against the ceiling 221 of the large shaft column 22, and the external periphery of the secondary spring 4 is proximate to the internal cylindrical wall of the center barrel 52. The cover 5 has a through hole 55 formed on an outer side of the cover 5 and penetrated through the channel 54 of the center base 51, and the channel 54 is communicated with the internal chamber 520of the center barrel 52. After the main body 1, piston cylinder 2, primary spring 3, secondary spring 4, colored O-ring 27, O-ring 16, 17 and cover 5 are assembled, the pressure gauge M as shown in FIG. 5 is formed.

The embedded clip 14 and connector 15 are installed at the rear end 13 of the main body 1 of the pressure gauge M of the present invention to provide a pressure source. For example, the duct 65 of the air compressor 6 as shown in FIGS. 1 and 2 has a rectangular embedding plate 68, so that the pressure gauge M can be combined with the duct 65 quickly.

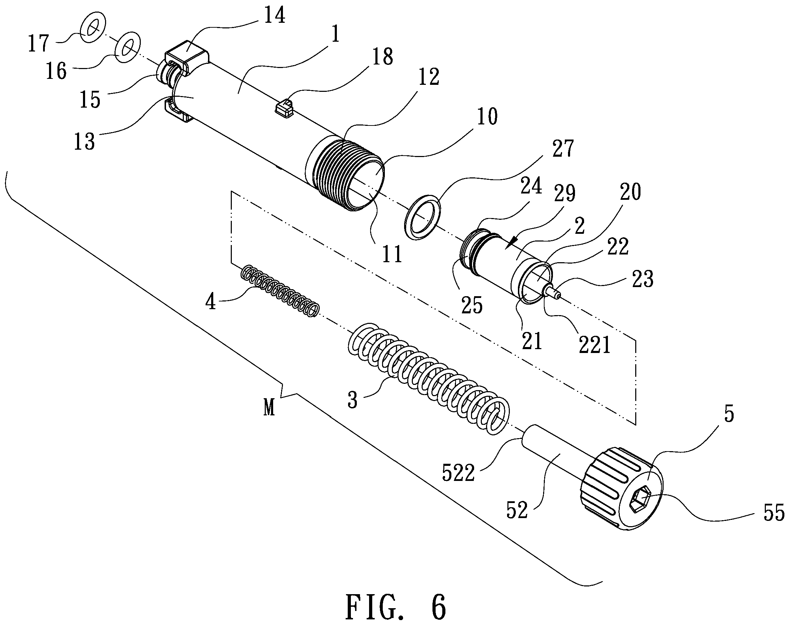

When the pressure gauge M of the present invention is applied as an air compressor 6 installed in a motor vehicle, the air compressor 6 comes with a box for installing the air compressor 6 and the pressure gauge M, so that the main body 1 of the pressure gauge M has the pair of the wing blocks 18 as shown in FIG. 6 to be latched and positioned easily at a rib of the box or into the cavity to achieve the requirements for stability.

Since the pressure gauge M of the present invention has a primary spring 3 with a relatively large coefficient of elasticity and a secondary spring 4 with a relatively smaller coefficient of elasticity, when the compressed air outputted from the duct 65 of the air compressor 6, the compressed air can enter from the inner channel 150 of the connector 15 of the main body 1 into the main body 1 of the pressure gauge M, and the outputted compressed air forces the piston cylinder to drive the internal primary spring 3 and large shaft column 22 apply a force to the secondary spring 4 disposed in the center barrel 52 by the direct communication relation between the cavity 26 formed at the base 24 of the piston cylinder 2 and the inner channel 150. The compressed air is inputted continuously to push the piston cylinder 2 to move towards the cover 5. The current pressure value can be visually observed through the color O-ring 2 and indicated by the numeric calibration marked on the transparent display screen 19 of the main body 1, and the process of measuring the pressure by the pressure gauge M is shown in FIGS. 3 and 4 continues until the object to be inflated is inflated completely. After the pressure gauge M is detached from the object to be inflated, outside air enters from the channel 54 of the cover 5 into the main body 1, the restoring force of the primary spring 3 and the secondary spring 4 resets the piston cylinder 2 reset to its original position. For safety purpose, when the pressure value of the compressed air is greater than the maximum safety pressure value, the colored O-ring 27 installed on the base 24 of the piston cylinder 2 has passed across the relief hole 191, so that the compressed air continuously entering into the interior of the pressure gauge M is released from the relief hole 191 to the outside to prevent damages to the object to be inflated. On the other hand, when an over pressure occurs in an inflation stage due to improper operation, the external top wall 522 at an end of the center barrel 52 of the cover 5 abuts against the blocking wall 223 of the base 24 in the piston cylinder 2, and this design can protect the primary spring 3 and the secondary spring 4 to prevent elastic fatigue and deformation caused by the overload pressure.

In summation of the description above, one of the technical characteristics of the present invention is that an air compressor 6 is connected to a pressure gauge M having an over-pressure protection unit, so that the air compressor 6 does not require the installation of an additional safety valve. The other technical characteristic is that the pressure gauge M of the present invention uses a linear shifter 29 to indicate a pressure value, and the linear shifter 29 can perform a linear movement similar to the movement of a piston of a pump moving in the cylinder, and the pressure gauge M is not a circular-box needle type pressure meter (or pressure gauge), but it is a pen piston type pressure gauge. The present invention not just has a structural design different from the prior art only, but also measures a pressure value more precisely and sensitively. In the meantime, an over-pressure protection unit is provided for preventing an over-pressure inflation operation, so as to provide a safety effect. Obviously, the present invention complies with patent application requirements, and thus is duly filed for patent application.

## Claims

1. An air compressor, comprising a substrate (60), a motor (691) coupled onto the substrate (60), a transmission mechanism (69), a cylinder (61) extended from the substrate (60) and having an air reservoir (63), a plurality of ducts (64, 65) installed at the air reservoir (63), a piston (62) installed in the cylinder (61) and driven by the transmission mechanism (69) and the motor (691) to input compressed air into the air reservoir (63) and output the compressed air from the ducts (64, 65) of the air reservoir (63), wherein a pressure gauge (M) having an over-pressure protection unit is directly coupled to one of the ducts (65), and the pressure gauge (M) measures and indicates a change of a current pressure value by a linear movement of an indicator member, and if the pressure value reaches a predetermined maximum safety pressure value, the pressure gauge (M) will discharge air through an over-pressure protection unit to achieve a safety effect and air compressor (6) requires no additional duct to install the pressure safety valve, wherein the pressure gauge (M) includes a main body (1), wherein the main body (1) is a pen having an internal chamber (11) of a circular caliber, and an end of the main body (1) is an open end, and the other end of the main body (1) is a rear end (13) for receiving compressed air generated by the air compressor (6), and a linear shifter (29) is installed in the internal chamber (11) of the main body (1), and the compressed air produced by the air compressor (6) is pushed and delivered to the linear shifter (29) to perform a linear displacement, **characterized in that** the main body (1) is made of a transparent material and has a display screen (19) with a numeric calibration installed at a position proximate to a rear end (13) of the main body (1), and the linear shifter (29) is a piston cylinder (2), and an end of the piston cylinder (2) is an open end (20) and the other end of the piston cylinder (2) is a base (24), wherein the piston cylinder (2) has an internal chamber (21) formed therein and the piston cylinder (2) is received in the internal chamber (11) of the main body (1), wherein a cavity (26) is formed on an outer surface of the base (24) of the piston cylinder (2), and a circular groove (25) is formed at the periphery for sheathing a colored O-ring (27), so that a user can see the colored O-ring (27) through the main body (1) and can determine the numeric calibration marked on the display screen (19) where the colored O-ring (27) is situated, so that a user can see clearly the current pressure value.

2. The air compressor of claim 1, wherein the over-pressure protection unit is a relief hole (191) penetrating through the main body (1).

3. The air compressor of claim 1, wherein the pressure gauge (M) further comprises a cover (5) including a female thread (50) for locking an open end of the main body (1); and an elastic element, disposed in the main body (1), and having an end abutted against the bottom of the internal chamber (21) of the piston cylinder (2), and the other end abutted against the cover (5); thereby the compressed air inputted into the main body (1) by the air compressor (6) is capable of actuating the piston cylinder (2) to compress the elastic element, and the pressure value is displayed on a numeric calibration display screen (19).

4. The air compressor of claim 1, wherein the base (24) of the piston cylinder (2) has a large shaft column (22) extended from the center position of the bottom of the internal chamber (2 1) and protruded from the open end (20), a circular cavity (222) is formed between the bottom of the large shaft column (22) and the cylindrical wall of the piston cylinder (2), and an end of the primary spring (3) is abutted at the position of a concave circular hole.

5. The air compressor of claim 4, wherein the piston cylinder (2) includes a blocking wall (223) formed at a joint position between the large shaft column (22) and the base (24) and having a diameter greater than the diameter of the large shaft column (22), a small shaft column (23) extended from the top of the large shaft column (22) and having a smaller diameter than that of the large shaft column (22), and a ceiling (221) formed at the top of the large shaft column (22), and the whole piston cylinder (2) is accommodated into the main body (1), and the base (24) abuts the bottom of the internal chamber (11), and the rear end (13) of the main body (1) has a pair of embedded clips (14) and a connector (15), and the connector (15) has an inner channel (150) communicated with the internal chamber (11) of the main body (1), and the connector (15) has two separate O-rings (16, 17) installed thereon, and the inner channel (150) of the connector (15) is communicated with the cavity (26) of the base (24), so that the compressed air produced by the air compressor (6) may be passed through the inner channel (150) and the cavity (26) to apply a pressure at the piston cylinder (2), so as to move the piston cylinder (2) in the internal chamber (11) of the main body (1) internal chamber (11).

6. The air compressor of claim 1, wherein the duct (65) has a rectangular embedding plate (68) disposed at an end of the duct (65), so that an embedded clip installed at a rear end of the main body (1) of the pressure gauge (M) can be coupled to rectangular embedding plate (68) to combine the pressure gauge (M) with the duct (65) quickly.

7. The air compressor of claim 3, wherein the cover (5) has a center base (51) disposed at the center of an inner side of the cover (5), and a ring accommodating slot (53) is formed between the center base (51) and the inner sidewall of the cover (5), and a center barrel (52) having an internal chamber (520) is extended from the top of the center base (51), and the center barrel (52) has an external diameter smaller than the external diameter of the center base (51), and a ceiling (511) is formed at a joint position between the center barrel (52) and the center base (51), and an external top wall (522) is formed at an end of the center barrel (52) and has an opening, and the internal chamber (520) has an internal diameter greater than the external diameter of the large shaft column (22), but the center barrel (52) has an external diameter smaller than the internal diameter of the primary spring (3), and the other end of the primary spring (3) abuts against the ceiling (511).

8. The air compressor of claim 7, wherein a secondary spring (4) having a relatively smaller coefficient of elasticity is installed in the internal chamber (520) of the center barrel (52), and an end of the secondary spring (4) abuts against the center base (51), and after the cover (5) is screwed and coupled to the open end (10) of the main body (1), the other end of the secondary spring (4) is sheathed on the small shaft column (23) and abuts against the ceiling (221) of the large shaft column (22), and the external periphery of the secondary spring (4) is proximate to the internal cylindrical wall of the center barrel (52).

9. The air compressor of claim 7, wherein the cover (5) has a through hole (55) formed on an outer side of the cover (5) and penetrating through the channel (54) of the center base (51), and the channel (54) is communicated with the internal chamber (520) of the center barrel (52).

10. The air compressor of claim 2 or 5, wherein the over-pressure protection unit is a relief hole (191) penetrating through the main body (1), and when pressure is inputted into the piston cylinder (2) to push and move the piston cylinder (2) continuously to reach the predetermined maximum safety pressure value, the colored O-ring (27) of the piston cylinder (2) is just passed across the relief hole (191), so that the inputted compressed air can be released from the relief hole (191), and the piston cylinder (2) is no longer pushed by the compressed air anymore, and the external top wall (522) at the end of the center barrel (52) of the cover (5) abuts against a blocking wall (223) on the base (24) in the piston cylinder (2) is capable of protecting the primary spring (3) and the secondary spring (4) from becoming elastically fatigue and deformed by the pressure caused by an overload.

## Patentansprüche

1. Luftkompressor, umfassend einen Träger (60), einen auf dem Träger (60) befestigten Motor (691), einen Übertragungsmechanismus (69), einen Zylinder (61), der sich von dem Träger (60) erstreckt und ein Luftreservoir (63) aufweist, wobei eine Mehrzahl von Rohrleitungen (64, 65) an dem Luftreservoir (63) angebracht ist, wobei ein Kolben (62) in dem Zylinder (61) installiert ist und durch den Übertragungsmechanismus (69) und den Motor (691) angetrieben wird, um Druckluft in das Luftreservoir (63) einzuführen und die Druckluft über die Rohrleitungen (64, 65) des Luftreservoirs (63) auszugeben, wobei ein Druckmessgerät (M), welches eine Überdruckschutzeinheit aufweist, direkt mit einer der Rohrleitungen (65) verbunden ist, und wobei das Druckmessgerät (M) eine Änderung eines aktuell vorliegenden Druckwerts durch eine lineare Bewegung eines Anzeigeelements misst und anzeigt, und wobei das Druckmessgerät (M), wenn der Druckwert einen vorgegebenen maximalen Sicherheitsdruckwert erreicht, Luft durch eine Überdruckschutzeinheit entlassen wird, um eine Schutzwirkung zu realisieren, wobei an dem Luftkompressor (6) keine zusätzliche Rohrleitung zur Montage des Drucksicherheitsventils erforderlich ist, wobei das Druckmessgerät (M) einen Hauptkörper (1) beinhaltet, wobei der Hauptkörper (1) ein Stift ist, der eine innere Kammer (11) mit einem kreisförmigen Format aufweist, wobei ein Ende des Hauptkörpers (1) ein offenes Ende ist, und wobei das andere Ende des Hauptkörpers (1) ein hinteres Ende (13) zur Aufnahme der durch den Luftkompressor (6) erzeugten Druckluft ist, und wobei eine Linearverschiebungseinheit (29) in der inneren Kammer (11) des Hauptkörpers (1) angebracht ist, wobei die durch den Luftkompressor (6) erzeugte Druckluft zu der Linearverschiebungseinheit (29) gedrängt und dieser zugeführt wird, damit diese eine lineare Verschiebung ausführt, **dadurch gekennzeichnet, dass** der Hauptkörper (1) aus einem transparenten Material gefertigt ist und einen Anzeigeschirm (19) mit einer numerischen Maßeinteilung aufweist, die an einer Stelle angebracht ist, die zu dem hinteren Ende (13) des Hauptkörpers (1) benachbart ist, und wobei die Linearverschiebungseinheit (29) ein Kolbenzylinder (2) ist, wobei ein Ende des Kolbenzylinders (2) ein offenes Ende (20) ist und das andere Ende des Kolbenzylinders (2) eine Basis (24) ist, wobei der Kolbenzylinder (2) eine darin ausgebildete innere Kammer (21) aufweist und der Kolbenzylinder (2) in der inneren Kammer (11) des Hauptkörpers (1) aufgenommen ist, wobei ein Hohlraum (26) an einer Außenfläche der Basis (24) des Kolbenzylinders (2) ausgebildet ist und an der Peripherie eine Ringnut (25) zur Ummantelung mit einem farbigen O-Ring (27) ausgebildet ist, sodass ein Benutzer den farbigen O-Ring (27) durch den Hauptkörper (1) hindurch sehen kann und die an dem Anzeigeschirm (19) markierte numerische Maßeinteilung ermitteln kann, wo sich der farbige O-Ring (27) befindet, sodass ein Benutzer den aktuell vorliegenden Druckwert deutlich erkennen kann.

2. Luftkompressor nach Anspruch 1, bei welchem die Überdruckschutzeinheit ein Entlastungsloch (191) ist, das den Hauptkörper (1) durchdringend ausgebildet ist.

3. Luftkompressor nach Anspruch 1, bei welchem das Druckmessgerät (M) ferner eine Abdeckung (5) mit einem Innengewinde (50) zum Verriegeln an einem offenen Ende des Hauptkörpers (1) und ein elastisches Element umfasst, das in dem Hauptkörper (1) angeordnet ist und ein Ende hat, das gegen den Boden der inneren Kammer (21) des Kolbenzylinders (2) gedrückt wird, wobei dessen anderes Ende gegen die Abdeckung (5) drückt, wodurch die Druckluft, die durch den Luftkompressor (6) in den Hauptkörper (1) eingeführt wird, dazu fähig ist, den Kolbenzylinder (2) so zu betätigen, dass das elastische Element zusammengedrückt wird, wobei der Druckwert an einem Anzeigeschirm (19) mit numerischer Maßeinteilung angezeigt wird.

4. Luftkompressor nach Anspruch 1, bei welchem die Basis (24) des Kolbenzylinders (2) eine große Schaftsäule (22) aufweist, die sich von der Mittelposition des Bodens der inneren Kammer (21) erstreckt und aus dem offenen Ende (20) hervorsteht, wobei ein kreisförmiger Hohlraum (222) zwischen der Unterseite der großen Schaftsäule (22) und der zylindrischen Wand des Kolbenzylinders (2) ausgebildet ist, wobei ein Ende der Primärfeder (3) an die Stelle eines konkaven kreisförmigen Lochs angrenzt.

5. Luftkompressor nach Anspruch 4, bei welchem der Kolbenzylinder (2) eine Sperrwand (223) beinhaltet, die an einer Verbindungsstelle zwischen der großen Schaftsäule (22) und der Basis (24) ausgebildet ist und einen Durchmesser hat, der größer ist als der Durchmesser der großen Schaftsäule (22), wobei sich eine kleine Schaftsäule (23) von der Oberseite der großen Schaftsäule (22) erstreckt und einen kleineren Durchmesser hat als die große Schaftsäule (22), wobei eine Decke (221) an der Oberseite der großen Schaftsäule (22) ausgebildet ist, und wobei der Kolbenzylinder (2) vollständig in dem Hauptkörper (1) aufgenommen ist, wobei die Basis (24) an dem Boden der inneren Kammer (11) anliegt, wobei das hintere Ende (13) des Hauptkörpers (1) ein Paar von integrierten Klemmen (14) und ein Verbindungsstück (15) aufweist, wobei das Verbindungsstück (15) einen Innenkanal (150) hat, der mit der inneren Kammer (11) des Hauptkörpers (1) in Verbindung steht, und wobei das Verbindungsstück (15) zwei separate daran befestigte O-Ringe (16, 17) aufweist, und wobei der Innenkanal (150) des Verbindungsstücks (15) mit dem Hohlraum (26) der Basis (24) verbunden ist, sodass die von dem Luftkompressor (6) produzierte Druckluft durch den Innenkanal (150) und den Hohlraum (26) hindurchgeführt werden kann, um einen Druck auf den Kolbenzylinder (2) auszuüben, um dadurch den Kolbenzylinder (2) in der inneren Kammer (11) des Hauptkörpers (1) in der inneren Kammer (11) zu bewegen.

6. Luftkompressor nach Anspruch 1, bei welchem die Rohrleitung (65) eine rechteckige Verankerungsplatte (68) aufweist, die an einem Ende der Rohrleitung (65) angeordnet ist, sodass eine integrierte Klemme, die an einem hinteren Ende des Hauptkörpers (1) des Druckmessgeräts (M) angebracht ist, mit der rechteckigen Verankerungsplatte (68) gekoppelt werden kann, um das Druckmessgerät (M) schnell mit der Rohrleitung (65) zu verbinden.

7. Luftkompressor nach Anspruch 3, bei welchem die Abdeckung (5) eine Mittelbasis (51) aufweist, die an der Mitte einer Innenseite der Abdeckung (5) angeordnet ist, wobei ein Ringaufnahmeschlitz (53) zwischen der Mittelbasis (51) und der inneren Seitenwand der Abdeckung (5) ausgebildet ist, wobei sich ein Mittelzylinder (52), der eine innere Kammer (520) hat, von der Oberseite der Mittelbasis (51) erstreckt, wobei der Mittelzylinder (52) einen Außendurchmesser hat, der kleiner ist als der Außendurchmesser der Mittelbasis (51), und wobei eine Decke (511) an einer Verbindungsstelle zwischen dem Mittelzylinder (52) und der Mittelbasis (51) ausgebildet ist, und wobei eine obere Außenwand (522) an einem Ende des Mittelzylinders (52) ausgebildet ist und eine Öffnung aufweist, und wobei die innere Kammer (520) einen Innendurchmesser aufweist, der größer ist als der Außendurchmesser der großen Schaftsäule (22), wobei aber der Mittelzylinder (52) einen Außendurchmesser hat, der kleiner ist als der Innendurchmesser der Primärfeder (3), und wobei das andere Ende der Primärfeder (3) an der Decke (511) anliegt.

8. Luftkompressor nach Anspruch 7, bei welchem eine Sekundärfeder (4) mit einem vergleichsweise kleineren Elastizitätskoeffizienten in der inneren Kammer (520) des Mittelzylinders (52) montiert ist, wobei ein Ende der Sekundärfeder (4) an der Mittelbasis (51) anliegt, und wobei das andere Ende der Sekundärfeder (4), nachdem die Abdeckung (5) an dem offenen Ende (10) des Hauptkörpers (1) verschraubt und mit diesem gekoppelt ist, an der kleinen Schaftsäule (23) aufgenommen ist und gegen die Decke (221) der großen Schaftsäule (22) drückt, wobei der Außenumfang der Sekundärfeder (4) sich nahe der inneren zylindrischen Wand des Mittelzylinders (52) befindet.

9. Luftkompressor nach Anspruch 7, bei welchem die Abdeckung (5) ein Durchgangsloch (55) aufweist, das an einer Außenseite der Abdeckung (5) ausgebildet ist und bis in den Kanal (54) der Mittelbasis (51) eindringt, wobei der Kanal (54) mit der inneren Kammer (520) des Mittelzylinders (52) in Verbindung steht.

10. Luftkompressor nach Anspruch 2 oder 5, bei welchem die Überdruckschutzeinheit ein Entlastungsloch (191) ist, das den Hauptkörper (1) durchdringt, wobei, wenn ein Druck, der auf den Kolbenzylinder (2) einwirkt, um gegen den Kolbenzylinder (2) zu drücken und diesen kontinuierlich zu bewegen, den vorgegebenen maximalen Sicherheitsdruckwert erreicht, der farbige O-Ring (27) des Kolbenzylinders (2) gerade das Entlastungsloch (191) passiert, sodass die zugeführte Druckluft über das Entlastungsloch (191) ausgelassen werden kann und der Kolbenzylinder (2) nicht länger durch die Druckluft weiter angeschoben wird, wobei die obere Außenwand (522) an dem Ende des Mittelzylinders (52) der Abdeckung (5) an einer Sperrwand (223) an der Basis (24) in dem Kolbenzylinder (2) anliegt, um dadurch zu gewährleisten, dass die Primärfeder (3) und die Sekundärfeder (4) vor einer elastischen Ermüdung und Deformation durch den durch eine Überlast hervorgerufenen Druck geschützt werden.

## Revendications

1. Compresseur d'air, comprenant un substrat (60), un moteur (691) accouplé sur le substrat (60), un mécanisme de transmission (69), un cylindre (61) étendu à partir du substrat (60) et possédant un réservoir d'air (63), une pluralité de conduites (64, 65) installées sur le réservoir d'air (63), un piston (62) installé dans le cylindre (61) et entraîné par le mécanisme de transmission (69) et le moteur (691) pour faire entrer de l'air comprimé dans le réservoir d'air (63) et faire sortir l'air comprimé des conduites (64, 65) du réservoir d'air (63), dans lequel un manomètre (M) possédant une unité de protection contre la surpression est directement accouplé à l'une des conduites (65), et le manomètre (M) mesure et indique un changement d'une valeur de pression actuelle par un mouvement linéaire d'un élément indicateur, et, si la valeur de pression atteint une valeur de pression de sécurité maximum prédéterminée, le manomètre (M) évacuera de l'air à travers une unité de protection contre la surpression pour accomplir un effet de sécurité et un compresseur d'air (6) ne nécessite aucune conduite supplémentaire pour installer la soupape de sûreté de pression, dans lequel le manomètre (M) inclut un corps principal (1), dans lequel le corps principal (1) est une enceinte possédant une chambre interne (11) d'un calibre circulaire, et une extrémité du corps principal (1) est une extrémité ouverte, et l'autre extrémité du corps principal (1) est une extrémité arrière (13) pour recevoir de l'air comprimé généré par le compresseur d'air (6), et un dispositif de déplacement linéaire (29) est installé dans la chambre interne (11) du corps principal (1), et l'air comprimé produit par le compresseur d'air (6) est poussé et fourni au dispositif de déplacement linéaire (29) pour réaliser un déplacement linéaire, **caractérisé en ce que** le corps principal (1) est fait d'un matériau transparent et possède un écran d'affichage (19) avec une calibration numérique installée à une position à proximité d'une extrémité arrière (13) du corps principal (1), et le dispositif de déplacement linéaire (29) est un cylindre à piston (2), et une extrémité du cylindre à piston (2) est une extrémité ouverte (20) et l'autre extrémité du cylindre à piston (2) est une base (24), dans lequel le cylindre à piston (2) possède une chambre interne (21) formée dans celui-ci et le cylindre à piston (2) est reçu dans la chambre interne (11) du corps principal (1), dans lequel une cavité (26) est formée sur une surface extérieure de la base (24) du cylindre à piston (2), et une rainure circulaire (25) est formée à la périphérie pour recevoir un joint torique coloré (27), pour qu'un utilisateur puisse voir le joint torique coloré (27) à travers le corps principal (1) et puisse déterminer la calibration numérique marquée sur l'écran d'affichage (19) où le joint torique coloré (27) se trouve, pour qu'un utilisateur puisse voir clairement la valeur de pression actuelle.

2. Compresseur d'air selon la revendication 1, dans lequel l'unité de protection contre la surpression est un trou de détente (191) pénétrant à travers le corps principal (1).

3. Compresseur d'air selon la revendication 1, dans lequel le manomètre (M) comprend en outre un couvercle (5) incluant un filet femelle (50) pour verrouiller une extrémité ouverte du corps principal (1); et un élément élastique, disposé dans le corps principal (1), et possédant une extrémité en appui contre le fond de la chambre interne (21) du cylindre à piston (2), et l'autre extrémité en appui contre le couvercle (5); ainsi l'air comprimé que le compresseur d'air (6) a fait entrer dans le corps principal (1) est capable d'actionner le cylindre à piston (2) pour comprimer l'élément élastique, et la valeur de pression est affichée sur un écran d'affichage de calibration numérique (19).

4. Compresseur d'air selon la revendication 1, dans lequel la base (24) du cylindre à piston (2) possède une colonne d'arbre de grande taille (22) étendue à partir de la position centrale du fond de la chambre interne (21) et faisant saillie à partir de l'extrémité ouverte (20), une cavité circulaire (222) est formée entre le fond de la colonne d'arbre de grande taille (22) et la paroi cylindrique du cylindre à piston (2), et une extrémité du ressort primaire (3) est en appui, à la position d'un trou circulaire concave.

5. Compresseur d'air selon la revendication 4, dans lequel le cylindre à piston (2) inclut une paroi de blocage (223) formée à une position de joint entre la colonne d'arbre de grande taille (22) et la base (24) et possédant un diamètre supérieur au diamètre de la colonne d'arbre de grande taille (22), une colonne d'arbre de petite taille (23) étendue à partir du haut de la colonne d'arbre de grande taille (22) et possédant un diamètre inférieur à celui de la colonne d'arbre de grande taille (22), et un plafond (221) formé en haut de la colonne d'arbre de grande taille (22), et le cylindre de piston entier (2) est logé dans le corps principal (1), et la base (24) prend appui sur le fond de la chambre interne (11), et l'extrémité arrière (13) du corps principal (1) possède une paire d'agrafes incorporées (14) et un raccord (15), et le raccord (15) possède un canal intérieur (150) en communication avec la chambre interne (11) du corps principal (1), et le raccord (15) possède deux joints toriques séparés (16, 17) installés sur celui-ci, et le canal intérieur (150) du raccord (15) est en communication avec la cavité (26) de la base (24), pour que l'air comprimé produit par le compresseur d'air (6) puisse passer à travers le canal intérieur (150) et la cavité (26) pour appliquer une pression sur le cylindre à piston (2), afin de déplacer le cylindre à piston (2) dans la chambre interne (11) du corps principal (1).

6. Compresseur d'air selon la revendication 1, dans lequel la conduite (65) possède une plaque d'incorporation rectangulaire (68) disposée à une extrémité de la conduite (65), pour qu'une agrafe incorporée installée à une extrémité arrière du corps principal (1) du manomètre (M) puisse être accouplée à la plaque d'incorporation rectangulaire (68) pour combiner le manomètre (M) avec la conduite (65) rapidement.

7. Compresseur d'air selon la revendication 3, dans lequel le couvercle (5) possède une base centrale (51) disposée au centre d'un côté intérieur du couvercle (5), et une fente de logement de bague (53) est formée entre la base centrale (51) et la paroi latérale intérieure du couvercle (5), et un corps cylindrique central (52) possédant une chambre interne (520) est étendue à partir du haut de la base centrale (51), et le corps cylindrique central (52) possède un diamètre externe inférieur au diamètre externe de la base centrale (51), et un plafond (511) est formé à une position de joint entre le corps cylindrique central (52) et la base centrale (51), et une paroi supérieure externe (522) est formée à une extrémité du corps cylindrique central (52) et possède une ouverture, et la chambre interne (520) possède un diamètre intérieur supérieur au diamètre externe de la colonne d'arbre de grande taille (22), mais le corps cylindrique central (52) possède un diamètre externe inférieur au diamètre interne du ressort primaire (3), et l'autre extrémité du ressort primaire (3) prend appui contre le plafond (511).

8. Compresseur d'air selon la revendication 7, dans lequel un ressort secondaire (4) possédant un coefficient d'élasticité relativement plus petit est installé dans la chambre interne (520) du corps cylindrique central (52), et une extrémité du ressort secondaire (4) prend appui contre la base centrale (51), et après que le couvercle (5) est vissé sur et accouplé à l'extrémité ouverte (10) du corps principal (1), l'autre extrémité du ressort secondaire (4) est reçue sur la colonne d'arbre de petite taille (23) et prend appui contre le plafond (221) de la colonne d'arbre de grande taille (22), et la périphérie externe du ressort secondaire (4) est à proximité de la paroi cylindrique interne du corps cylindrique central (52).

9. Compresseur d'air selon la revendication 7, dans lequel le couvercle (5) possède un trou débouchant (55) formé sur un côté extérieur du couvercle (5) et pénétrant à travers le canal (54) de la base centrale (51), et le canal (54) est en communication avec la chambre interne (520) du corps cylindrique central (52).

10. Compresseur d'air selon la revendication 2 ou 5, dans lequel l'unité de protection contre la surpression est un trou de détente (191) pénétrant à travers le corps principal (1), et lorsqu'une pression est entrée dans le cylindre à piston (2) pour pousser et déplacer le cylindre à piston (2) en continu pour atteindre la valeur de pression de sécurité maximum prédéterminée, le joint torique coloré (27) du cylindre à piston (2) passe juste à travers le trou de détente (191), pour que l'air comprimé entré puisse être libéré du trou de détente (191), et le cylindre à piston (2) n'est plus poussé par l'air comprimé, et la paroi supérieure externe (522) à l'extrémité du corps cylindrique central (52) du couvercle (5) qui prend appui contre une paroi de blocage (223) sur la base (24) dans le cylindre à piston (2) est capable de protéger le ressort primaire (3) et le ressort secondaire (4) pour qu'il ne soit pas élastiquement fatigué et déformé par la pression causée par une surcharge.
